# EUROPÄISCHE PATENTSCHRIFT

(11) **EP 2 834 554 B1**
(45) Veröffentlichungstag und Bekanntmachung des Hinweises auf die Patenterteilung: **24.07.2019**
(21) Anmeldenummer: 13706253.5
(22) Anmeldetag: 25.02.2013
(51) Int. Cl.: F21S 41/14, F21S 41/25, F21S 41/147, F21S 41/63, F21S 41/64, F21S 41/675, F21S 41/16, G02B 19/00, G02B 26/10, G02B 3/14, F21V 5/00

(54) **BELEUCHTUNGSVORRICHTUNG FÜR EIN KRAFTFAHRZEUG**
ILLUMINATION DEVICE FOR A MOTOR VEHICLE
DISPOSITIF D'ECLAIRAGE POUR UN VÉHICULE

(30) Priorität: 03.04.2012 DE 102012205437
(43) Veröffentlichungstag der Anmeldung: 11.02.2015
(73) Patentinhaber: Bayerische Motoren Werke Aktiengesellschaft, 80809 München (DE)
(72) Erfinder: ERDL, Helmut, 83126 Flintsbach (DE); HANAFI, Abdelmalek, 80686 München (DE)
(86) Internationale Anmeldenummer: PCT/EP2013/053685
(87) Internationale Veröffentlichungsnummer: WO 2013/149766

(56) Entgegenhaltungen:
- EP-A2- 2 537 708
- JP-A- 2009 224 039
- JP-A- 2010 036 835
- JP-A- 2011 157 022
- US-A1- 2009 046 474
- US-A1- 2011 249 460

## Beschreibung

Die Erfindung betrifft eine Beleuchtungsvorrichtung für ein Kraftfahrzeug gemäß dem Oberbegriff des Anspruchs 1.

Aus dem Stand der Technik sind scannende Beleuchtungssysteme für Kraftfahrzeuge bekannt, welche mit einem Scanner ein über zumindest eine Halbleiterdiode erzeugtes Lichtbündel geeignet ablenken, um verschiedene Lichtverteilungen darzustellen. Im Allgemeinen werden dabei Zeilenscanner eingesetzt, welche den Beleuchtungsbereich, in dem die Lichtverteilung zu erzeugen ist, zeilenweise mit fester Scan-Geschwindigkeit und festem Scan-Muster abtasten. Um unterschiedliche Lichtverteilungen zu erzeugen, wird dabei die Lichtleistung der Halbleiterdioden variiert oder die Dioden werden an- und abgeschaltet.

Herkömmliche scannende Beleuchtungsvorrichtungen weisen den Nachteil auf, dass die Halbleiterdioden zur Generierung der vorbestimmten Lichtverteilung nicht zu jedem Zeitpunkt auf voller Leistung betrieben werden, was bedeutet, dass die Lichtquelle nicht mit maximaler Kosten-Nutzen-Effizienz eingesetzt wird. Zur Erzeugung von Lichtverteilungen mit großer Detailgenauigkeit und hohen Kontrasten ist ferner eine räumlich hochfrequente Scannerabtastung und eine hochfrequente zeitliche Intensitätsmodulierung der Halbleiterdioden erforderlich, was wiederum eine aufwändige und teure elektronische Steuerung für die Beleuchtungsvorrichtung voraussetzt.

Das Dokument JP 2011 157022 A offenbart eine Beleuchtungsvorrichtung für ein Kraftfahrzeug mit einer Laserlichtquelle und einem Scanner, wobei die Ausgangsleistung der Laserlichtquelle angepasst werden kann.

In der Druckschrift US 2011/249460 A1 ist eine Beleuchtungsvorrichtung für ein Kraftfahrzeug gezeigt, welche eine Scanner-Einheit zur Erzeugung einer variablen Lichtverteilung umfasst.

In der Druckschrift US 2009/046474 A1 ist eine Beleuchtungsvorrichtung für ein Kraftfahrzeug mit einem Scanner beschrieben, dessen Bewegung zur Erzeugung einer breiten Lichtverteilung gesteuert werden kann.

Aufgabe der Erfindung ist es, eine scannende Beleuchtungsvorrichtung für ein Kraftfahrzeug zu schaffen, mit der einfach und effizient eine vorbestimmte Lichtverteilung generiert wird.

Diese Aufgabe wird durch die Beleuchtungsvorrichtung gemäß Patentanspruch 1 gelöst. Weiterbildungen der Erfindung sind in den abhängigen Ansprüchen definiert.

Die erfindungsgemäße Beleuchtungsvorrichtung umfasst eine Lichtquelle aus einer Anzahl von Halbleiterdioden sowie einen Scanner, auf den ein aus dem Licht der Lichtquelle erzeugtes Lichtbündel fällt und der im Betrieb der Beleuchtungsvorrichtung die Lage des Lichtbündels verändert und hierdurch einen durch das Lichtbündel erzeugten Lichtspot in einem Abstand von der Beleuchtungsvorrichtung und insbesondere im Fernfeld der Beleuchtungsvorrichtung bewegt. Mit dem bewegten Lichtspot wird über ein entsprechendes Steuermittel eine vorbestimmte Lichtverteilung generiert. Mit der Beleuchtungsvorrichtung kann vorzugsweise eine Mehrzahl von verschiedenen vorbestimmten Lichtverteilungen durch entsprechende Ansteuerung des Steuermittels erzeugt werden. Unter Fernfeld ist die Lichtverteilung in einem Abstand von der Beleuchtungsvorrichtung zu verstehen, der wesentlich größer als die Abmessungen der Beleuchtungsvorrichtung ist und insbesondere im Bereich von 25 m vor der Beleuchtungsvorrichtung liegt. Unter einem Lichtbündel ist ein im Winkel bzw. im Raum begrenztes Bündel aus Lichtstrahlen zu verstehen, wobei die Lichtstrahlen im Bündel im Wesentlichen parallel bzw. auch auseinander oder zusammenlaufen können. Das Lichtbündel kann dabei durch die Lichtquelle selbst bzw. ggf. auch durch eine oder mehrere optische Einrichtungen zwischen Lichtquelle und Scanner erzeugt werden.

In der erfindungsgemäßen Vorrichtung ist der Scanner ein Vektorscanner, mit dem die Scan-Geschwindigkeit und der Scan-Pfad, entlang dem der Lichtspot bewegt wird, variiert werden können und zur Generierung der vorbestimmten Lichtverteilung mit einem entsprechenden Steuermittel gesteuert werden. Somit wird durch die Verwendung von an sich bekannten Vektorscannern in einfacher Weise die Variation der Scan-Geschwindigkeit bzw. des Scan-Pfads ermöglicht. Erfindungsgemäß ist die Beleuchtungsvorrichtung derart ausgestaltet, dass mit der Beleuchtungsvorrichtung eine vorbestimmte Lichtverteilung mit örtlich variierter Lichtstärke generierbar ist, wobei die Scan-Geschwindigkeit in Bereichen der vorbestimmten Lichtverteilung mit höherer Lichtstärke reduziert wird. Ferner ist die erfindungsgemäße Beleuchtungsvorrichtung derart ausgestaltet, dass die Anzahl der Halbleiterdioden zur Generierung der vorbestimmten Lichtverteilung mit konstanter und vorzugsweise maximaler Leistung betrieben werden, wodurch die Vorrichtung besonders wirtschaftlich eingesetzt wird.

In einer besonders bevorzugten Ausführungsform ist die Beleuchtungsvorrichtung derart ausgestaltet, dass der Lichtspot gemäß dem Scan-Pfad Bereiche der vorbestimmten Lichtverteilung mit höherer Lichtstärke häufiger passiert.

In einer bevorzugten Ausführungsform ist die erfindungsgemäße Beleuchtungsvorrichtung derart ausgestaltet, dass die Größe des Lichtspots variierbar ist und zur Generierung der vorbestimmten Lichtverteilung mit einem entsprechenden Steuermittel gesteuert wird.

Der Scan-Pfad entspricht dem Bewegungsmuster des Lichtspots, das über die Veränderung der Lage des Lichtbündels erzeugt wird. Über eine entsprechende Definition eines Scan-Pfads kann dabei der Bereich begrenzt werden, in dem eine vorbestimmte Lichtverteilung vorliegt. Ferner kann durch mehrfaches Abfahren derselben Bereiche gemäß dem definierten Scan-Pfad die Lichtstärke in diesen Bereichen entsprechend erhöht werden.

Die erfindungsgemäße Beleuchtungsvorrichtung weist den Vorteil auf, dass durch die variable Scan-Geschwindigkeit bzw. den variablen Scan-Pfad bzw. optional die variable Lichtspotgröße eine vorbestimmte Lichtverteilung einfach eingestellt und gegebenenfalls auch während der Generierung der Lichtverteilung verändert werden kann, ohne dass hierfür auf die Lichtleistung der Halbleiterdioden Einfluss genommen werden muss. Hierdurch können problemlos beliebige Lichtverteilungen realisiert werden. Ferner kann im Vergleich zu herkömmlichen Zeilenscannern die Abtastraste verringert werden, wodurch störende Bewegungseffekte vermieden werden.

In einer weiteren Ausführungsform der erfindungsgemäßen Beleuchtungsvorrichtung ist eine vorbestimmte Lichtverteilung mit örtlich variierter Auflösung generierbar, wobei in Bereichen der vorbestimmten Lichtverteilung mit höherer örtlicher Auflösung die Größe des Lichtspots vermindert wird.

In einer besonders bevorzugten Ausführungsform wird als Lichtquelle in der erfindungsgemäßen Beleuchtungsvorrichtung eine Laserlichtquelle eingesetzt. Das heißt, die Halbleiterdioden umfassen eine oder mehrere und insbesondere ausschließlich Laserdioden. Hierdurch kann eine Lichtverteilung mit sehr hoher lokaler Lichtstärke erzeugt werden. Die Laserdioden weisen vorzugsweise eine jeweilige Maximalleistung von mindestens 1 W und insbesondere zwischen 1,5 und 5 W auf

Zur Variation der Größe des Lichtspots ist in einer bevorzugten Ausführungsform der Beleuchtungsvorrichtung eine optische Einrichtung vorgesehen, auf welche das Lichtbündel nach Passieren des Scanners fällt. Insbesondere umfasst diese optische Einrichtung eine Linse und/oder einen Reflektor mit variierbarer Brennweite. Solche optischen Elemente sind an sich bekannt und bestehen z.B. aus elektroaktiven Substanzen, welche ihre Eigenschaften durch Anlegen einer elektrischen Spannung derart verändern, dass die Brennweite der Linse bzw. des Reflektors variiert wird.

In einer weiteren Ausführungsform der Erfindung ist die Lichtquelle eine monochromatische Lichtquelle, wobei ein Konvertierungselement zur Wandlung des Lichts der Lichtquelle in Weißlicht vorgesehen ist. Solche Konvertierungselemente sind an sich aus dem Stand der Technik bekannt. Beispielsweise kann bei blauen/violetten Laserdioden mit einer Emissionswellenlänge von 450 nm/405 nm ein Phosphorkonvertierungselement aus Nitrid-Phosphor oder Oxidnitrid-Phosphor oder Cerium-dotiertem YAG-Phosphor zur Generierung von Weißlicht verwendet werden.

Das Konvertierungselement, welches insbesondere als eine Schicht ausgestaltet ist, kann je nach Ausgestaltung der Erfindung an unterschiedlichen Positionen angeordnet sein. Insbesondere kann das Konvertierungselement an der Lichtquelle oder zwischen Lichtquelle und Scanner angeordnet sein. Im letzteren Fall ist das Konvertierungselement an einer Position im Strahlengang des Lichtbündels angeordnet, bevor das Lichtbündel auf den Scanner fällt. Ebenso kann das Konvertierungselement jedoch an einer Position angeordnet sein, an der das Lichtbündel den Scanner bereits passiert hat.

Je nach Anwendungsfall kann die erfindungsgemäße Beleuchtungsvorrichtung verschiedene Funktionalitäten übernehmen. In einer Ausführungsform umfasst die Beleuchtungsvorrichtung einen Scheinwerfer. Ein Scheinwerfer zeichnet sich dadurch aus, dass er aktiv die Umgebung des Fahrzeugs ausleuchtet. Gegebenenfalls kann die erfindungsgemäße Beleuchtungsvorrichtung auch eine Signalleuchte umfassen, welche sich dadurch auszeichnet, dass sie lediglich zur Signalgebung für andere Verkehrsteilnehmer dient.

In einer bevorzugten Variante ist die Beleuchtungsvorrichtung als Scheinwerfer derart ausgestaltet, dass im Betrieb als vorbestimmte Lichtverteilung eine Abblendlichtcharakteristik generiert wird. Diese zeichnet sich durch eine scharfe Hell-Dunkel-Grenze aus, die auf einfache Weise durch die Steuerung der Scan-Geschwindigkeit bzw. des Scan-Pfads bzw. die Größe des Lichtspots erzeugt werden kann. Insbesondere kann dabei im Bereich der Hell-Dunkel-Grenze der Lichtspot entsprechend verkleinert werden, um hierdurch eine hohe örtliche Auflösung für diesen Grenzbereich zu gewährleisten. Gegebenenfalls kann die Beleuchtungsvorrichtung auch derart ausgestaltet sein, dass sie im Betrieb als vorbestimmte Lichtverteilung eine Fernlichtcharakteristik generiert.

In einer weiteren Ausgestaltung der erfindungsgemäßen Beleuchtungsvorrichtung ist zwischen Lichtquelle und Scanner eine Einrichtung zur Strahlbegrenzung vorgesehen, mit welcher der Querschnitt des Lichtbündels entlang einer vorbestimmten Grenze begrenzt wird, wobei die Beleuchtungsvorrichtung derart ausgestaltet ist, das mit zumindest einem Abschnitt der vorbestimmten Grenze eine oder mehrere Hell-Dunkel-Grenzen in der vorbestimmten Lichtverteilung gebildet werden. Mit einer derartigen Einrichtung können auf einfache Weise durch die vorbestimmte Grenze, die auf den Lichtspot abgebildet wird und sich mit diesem bewegt, scharfe Hell-Dunkel-Grenzen in der Lichtverteilung erzeugt werden.

In einer besonders bevorzugten Variante umfasst die Einrichtung zur Strahlbegrenzung eine Blende. Dabei wird durch die Blendenöffnung der Querschnitt des Lichtbündels entlang der vorbestimmten Grenze begrenzt. Die Blende kann ggf. innerhalb einer optischen Einrichtung angeordnet sein, welche das Lichtbündel auf die Blendenöffnung richtet und das auf die Blende gerichtete Lichtbündel auf den Scanner wirft. Diese optische Einrichtung kann z.B. zumindest eine Linse vor und/oder zumindest eine Linse hinter der Blende umfassen. Alternativ oder zusätzlich kann die Einrichtung zur Strahlbegrenzung auch einen Lichtleiter und insbesondere eine optische Faser umfassen. Der Querschnitt des Lichtleiters legt in diesem Fall die Begrenzung des Lichtbündels fest.

In einer bevorzugten Variante umfasst die vorbestimmte Grenze, die mit der Einrichtung zur Strahlbegrenzung erzeugt wird, eine oder mehrere gerade Linien, mit denen die Hell-Dunkel-Grenze oder die Hell-Dunkel-Grenzen in der vorbestimmten Lichtverteilung gebildet werden. Vorzugsweise ist die vorbestimmte Grenze dabei ein Parallelogramm. Mit einem Parallelogramm kann über die entsprechenden Richtungen seiner Kanten z.B. eine Abblendlichtcharakteristik erzeugt werden. Diese Charakteristik umfasst in der Regel eine gerade, horizontal verlaufende Hell-Dunkel-Grenze im Bereich der Fahrbahnmitte und eine schräg nach oben verlaufende Hell-Dunkel-Grenze am Fahrbahnrand. Diese Hell-Dunkel-Grenzen können über entsprechende Kanten des Parallelogramms und der darauf abgestimmten Bewegung des Scanners in der Lichtverteilung abgebildet werden.

Neben der erfindungsgemäßen Beleuchtungsvorrichtung betrifft die Erfindung ferner ein Kraftfahrzeug, welches eine oder mehrere der erfindungsgemäßen Beleuchtungsvorrichtungen umfasst.

Ein Ausführungsbeispiel der Erfindung wird nachfolgend anhand der beigefügten Figuren detailliert beschrieben.

Es zeigen:
- Fig. 1: eine schematische Darstellung einer Ausführungsform einer erfindungsgemäßen Beleuchtungsvorrichtung; und
- Fig. 2: Beispiele von zwei Lichtverteilungen, welche mit der erfindungsgemäßen Beleuchtungsvorrichtung generierbar sind.

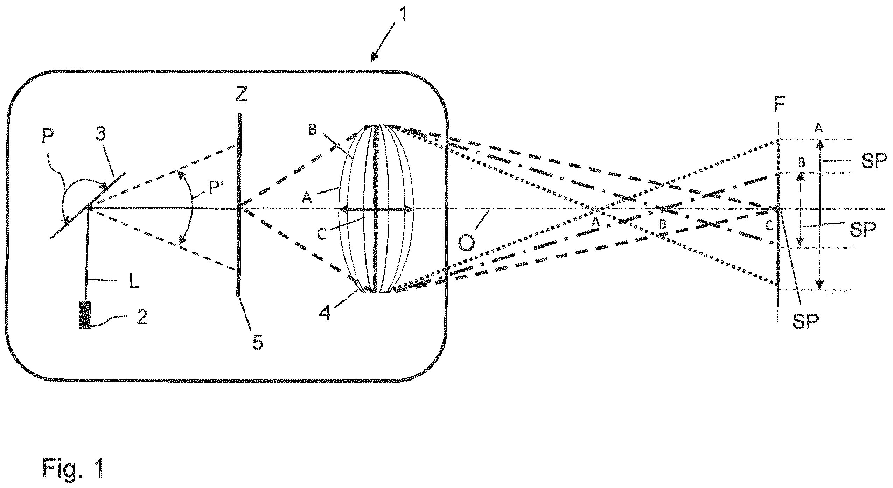

Fig. 1 zeigt in Seitenansicht eine erfindungsgemäße Beleuchtungsvorrichtung 1, bei der es sich um einen in einem Kraftfahrzeug (nicht gezeigt) verbauten Scheinwerfer handelt. Die Beleuchtungsvorrichtung 1 umfasst eine Lichtquelle 2 in der Form einer Laserdiode mit Vorsatzoptik, mit der ein Lichtbündel L mit hoher Leuchtdichte generiert wird. Das Lichtbündel L fällt auf einen lediglich schematisch angedeuteten Vektorscanner 3, der über ein geeignetes Reflektorelement durch dessen Verschwenkung das Lichtbündel in einen vorbestimmten Winkelbereich lenkt. Der Schwenkbereich des Scanners in der Blattebene ist durch den Doppelpfeil P und der damit korrespondierende Schwenkbereich des Lichtbündels L durch den Doppelpfeil P' angedeutet. Neben der Verschwenkung in der Blattebene, mit der die vertikale Position des Lichtbündels variiert wird, kann der Scanner auch in horizontaler Richtung verschwenkt werden, wodurch die Position des Lichtbündels in der Horizontalen verändert werden kann.

Der Vektorscanner wird mit einer (nicht gezeigten) Steuereinrichtung gesteuert, mit der zum einen die Geschwindigkeit der Bewegung des Lichtbündels in dem Schwenkbereich des Scanners und zum anderen auch der Bewegungspfad des Lichtbündels geeignet variiert bzw. eingestellt werden kann. Hierdurch unterscheidet sich der Vektorscanner von herkömmlichen Zeilenscannern, welche lediglich eine konstante, zeilenweise Bewegung des Lichtbündels in einem vorbestimmten Scanbereich ermöglichen. Durch die Verwendung des Vektorscanners können auf einfache Weise beliebige vorbestimmte Lichtverteilungen mit der Beleuchtungsvorrichtung generiert werden, wie weiter unten noch näher beschrieben wird.

Über die Laserlichtquelle 2 wird ein monochromatisches Lichtbündel erzeugt, welches nach Passieren des Scanners in der Zwischenbildebene Z fokussiert und dort in Weißlicht gewandelt wird. In der Ebene Z befindet sich hierzu ein an sich bekanntes Konvertierungselement 5, welches als Konverterschicht ausgestaltet ist. Das auf der Konverterschicht erzeugte Bild wird anschließend über eine Austrittsoptik in der Form einer Linse 4 mit variabler Brechkraft im Fernfeld F der Beleuchtungsvorrichtung (angedeutet durch die Ebene F) in einen Lichtspot SP gewandelt, der seine Lage entsprechend der Bewegung des Lichtbündels verändert. Fig. 1 zeigt die Generierung des Lichtspots im Falle, dass sich das Lichtbündel L gerade auf der optischen Achse O befindet. Dabei sind verschiedene Lichtspots unterschiedlicher Größe angedeutet.

Durch entsprechende Einstellung bzw. Variation der Scan-Geschwindigkeit bzw. des Bewegungs-Pfads des Lichtbündels L wird die erwünschte Lichtverteilung im Fernfeld F im Abstand von etwa 25 m generiert, ohne dass es erforderlich ist, die Laserlichtquelle 2 an- und abzuschalten bzw. in der Intensität zu variieren. Die Laserlichtquelle 2 strahlt deshalb im Betrieb mit einer festen Leistung und vorzugsweise mit der Maximalleistung ab. Je nach erwünschter Lichtverteilung wird der Lichtspot SP in Bereichen mit hoher Lichtstärke mit langsamerer Scan-Geschwindigkeit bewegt. Alternativ oder zusätzlich kann der Lichtspot diese Bereiche auch öfters abfahren. Im Unterschied hierzu wird der Lichtspot in Bereichen mit geringerer erwünschter Lichtstärke schneller bewegt bzw. weniger häufig dorthin gelenkt.

Mit der Linse 4 kann aus dem Zwischenbild der Ebene Z ein Lichtspot mit variabler Größe generiert werden. Es sind dabei drei verschiedene Einstellungen A, B und C der Linse 4 gezeigt, wobei die Einstellung A einer kleinen Brennweite, die Einstellung B einer mittleren Brennweite und die Einstellung C einer großen Brennweite der Linse entspricht. Für den auf der optischen Achse befindlichen und mit der Konvertierungsschicht erzeugten Weißlichtpunkt in der Zwischenbildebene Z ist der Strahlverlauf nach Passieren der Linse 4 für die Einstellung A mit gepunkteten Linien, für die Einstellung B mit strichpunktierten Linien und für die Einstellung C mit gestrichelten Linien angedeutet. Der Schnittpunkt der jeweiligen Strahlverläufe mit der optischen Achse O ist entsprechend den Einstellungen wiederum mit A, B und C bezeichnet. Für die Einstellung C ergibt sich im Fernfeld F ein Lichtspot SP, der sehr klein und im Wesentlichen punktförmig ist. Demgegenüber wird durch die Einstellung B und C eine Defokussierung bewirkt, wodurch für die Einstellung B ein Lichtspot mit mittlerem Durchmesser und für die Einstellung A ein Lichtspot mit großem Durchmesser generiert wird.

Linsen mit variabler Brechkraft sind an sich aus dem Stand der Technik bekannt und bestehen z.B. aus elektroaktiven Polymeren bzw. Elastomeren, wobei durch Anlegen einer elektrischen Spannung eine Veränderung der Brennweite bewirkt wird. Die Variation der Brennweite der Linse 4 erfolgt vorzugsweise über die gleiche Steuereinrichtung, welche auch zur Steuerung des Vektorscanners 3 eingesetzt wird. Mit der Linse kann die Größe des Lichtspots in Abhängigkeit von der gewünschten örtlichen Auflösung in bestimmten Bereichen der Lichtverteilung im Fernfeld variiert werden. Insbesondere wird die Spotgröße dabei in Bereichen erhöht, in denen lediglich eine geringe Auflösung der Lichtverteilung erforderlich ist, wohingegen in anderen Bereichen, in denen die Lichtverteilung hoch aufgelöst werden soll, z.B. an der Hell-Dunkel-Grenze eine Abblendlichtcharakteristik, der Lichtspot entsprechend verkleinert wird.

Wie oben dargelegt, können mit der Ausführungsform der Fig. 1 über einen Vektorscanner 3 die Scan-Geschwindigkeit und der Scan-Pfad eines Lichtspots und mit einer Linse 4 die Größe des Lichtspots variiert werden. Gegebenenfalls ist es auch möglich, dass in der erfindungsgemäßen Beleuchtungsvorrichtung nur ein Vektorscanner bzw. nur eine Linse mit variabler Brechkraft zur Erzeugung der Lichtverteilung verbaut ist, sofern das entsprechende Bauteil für den Verwendungszweck der Beleuchtungsvorrichtung ausreichend ist. Ferner besteht auch die Möglichkeit, dass die Konverterschicht 5 an einer anderen Position im Strahlengang angeordnet ist, z.B. kann die Konverterschicht auch an der Lichtquelle 2 bzw. zwischen Lichtquelle 2 und Scanner 3 positioniert sein.

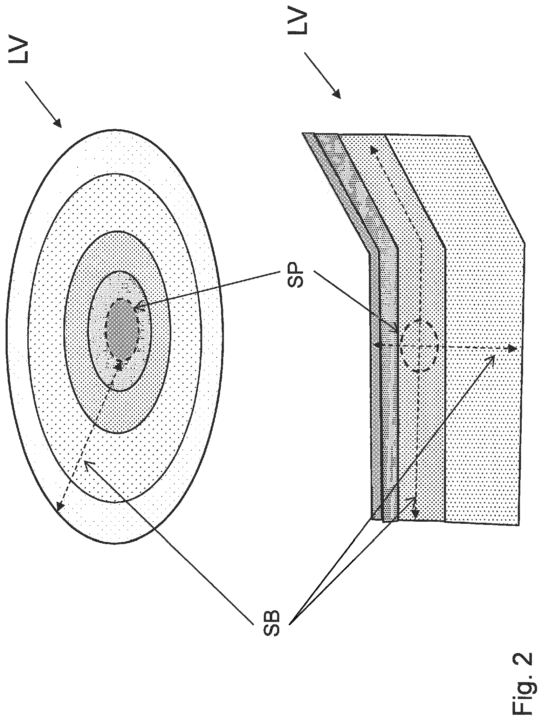

Fig. 2 zeigt beispielhaft zwei Lichtverteilungen LV im Fernfeld des Scheinwerfers 1, welche über die entsprechende Steuerung des Vektorscanners bzw. der Linse mit variabler Brennkraft gemäß Fig. 1 generiert werden können. Die obere Lichtverteilung stellt dabei eine Fernlichtverteilung und die untere Lichtverteilung eine Abblendlichtverteilung des Kraftfahrzeugs dar. Die Fernlichtverteilung weist die Form einer Ellipse auf, wobei schematisch durch unterschiedliche Füllungen der Ellipse angedeutet wird, dass die Intensität des Lichts in der Verteilung von Innen nach Außen abnimmt. In der realen Lichtverteilung nimmt diese Intensität kontinuierlich ab. Im Gegensatz zur Fernichtverteilung hat die Abblendlichtverteilung die Form eines Streifens, der am rechten Rand (d.h.am Fahrbahnrand) nach oben abknickt. Durch die obere Kante des Streifens wird eine scharfe Hell-Dunkel-Grenze gebildet. Über unterschiedliche Füllungen innerhalb des Streifens wird wiederum schematisch angedeutet, dass die Intensität des Lichts in der Verteilung von oben nach unten abnimmt. In der realen Lichtverteilung nimmt diese Intensität kontinuierlich ab.

Die beiden Lichtverteilungen werden durch einen Lichtspot SP erzeugt, der in Fig. 2 eine gestrichelt angedeutete Ellipse ist. Über die Steuerung des Vektorscanners kann die Spot-Bewegung SB, welche durch gestrichelte Doppelpfeile angedutet ist, variiert werden. Insbesondere kann die Lichtstärke der einzelnen Bereiche aus Fig. 2 durch entsprechende Variation der Scan-Geschwindigkeit bzw. der Häufigkeit, mit der der Lichtspot entsprechende Lichtbereiche passiert, verändert werden. Die dargestellten Lichtverteilungen LV sind lediglich beispielhaft und es können auch beliebige andere Lichtverteilungen erzeugt werden.

Die im Vorangegangenen beschriebene Ausführungsform der Erfindung weist eine Reihe von Vorteilen auf. Durch die Verwendung eines Vektorscanners bzw. einer Linse mit variabler Brechkraft können die Lichtquelle bzw. die darin enthaltenen Dioden kontinuierlich mit maximaler Leistung und damit sehr effizient eingesetzt werden. Der Lichtspot wird dabei an Positionen der Lichtverteilung mit hoher Leuchtdichte langsamer oder öfter vorbeigeführt bzw. mehr oder weniger dorthin gelenkt, wo viel oder wenig Lichtstärke gemäß der vorbestimmten Lichtverteilung gefordert ist. Im Unterschied zu herkömmlichen Zeilenscannern kann auf eine hohe Zeilenfrequenz für die Abtastrate verzichtet werden, wodurch die Erzeugung von störenden Bewegungseffekten (z.B. Flimmern) vermieden wird. Durch die Variation der Größe des Lichtspots mit der Linse kann ferner die örtliche Auflösung der Lichtverteilung verändert werden. Hierdurch können ohne großem technischen Aufwand spezielle Strukturen bzw. Eigenschaften von Lichtverteilungen dargestellt werden.

### Bezugszeichenliste

- 1: Beleuchtungsvorrichtung
- 2: Lichtquelle
- 3: Scanner
- 4: Linse
- 5: Konvertierungsschicht
- L: Lichtbündel
- P, P': Pfeile
- Z: Zwischenbildebene
- A, B, C: variable Einstellungen der Linse
- F: Fernfeld
- SP: Lichtspot
- O: optische Achse
- LV: Lichtverteilung
- SB: Bewegung des Lichtspots

## Patentansprüche

1. Beleuchtungsvorrichtung für ein Kraftfahrzeug, umfassend eine Lichtquelle (2) aus einer Anzahl von Halbleiterdioden sowie einen Scanner (3), auf den ein aus dem Licht der Lichtquelle (2) erzeugtes Lichtbündel (L) fällt und der im Betrieb der Beleuchtungsvorrichtung (1) die Lage des Lichtbündels (L) verändert und hierdurch einen durch das Lichtbündel (L) erzeugten Lichtspot (SP) in einem Abstand von der Beleuchtungsvorrichtung (1) bewegt, wobei mit dem bewegten Lichtspot (SP) eine vorbestimmte Lichtverteilung (LV) generiert wird, wobei der Scanner (3) ein Vektorscanner ist, mit dem die Scan-Geschwindigkeit und der Scan-Pfad variiert werden können und zur Generierung der vorbestimmten Lichtverteilung (LV) gesteuert werden, **dadurch gekennzeichnet, dass**
die Beleuchtungsvorrichtung (1) derart ausgestaltet ist, dass mit der Beleuchtungsvorrichtung (1) eine vorbestimmte Lichtverteilung (LV) mit örtlich variierter Lichtstärke generierbar ist, wobei die Scan-Geschwindigkeit in Bereichen der vorbestimmten Lichtverteilung (LV) mit höherer Lichtstärke reduziert wird, und die Beleuchtungsvorrichtung derart ausgestaltet ist, dass die Anzahl von Halbleiterdioden zur Generierung der vorbestimmten Lichtverteilung (LV) mit konstanter Leistung betrieben werden.

2. Beleuchtungsvorrichtung nach Anspruch 1, **dadurch gekennzeichnet, dass** die Beleuchtungsvorrichtung (1) derart ausgestaltet ist, dass der Lichtspot (SP) gemäß dem Scan-Pfad Bereiche der vorbestimmten Lichtverteilung (LV) mit höherer Lichtstärke häufiger passiert.

3. Beleuchtungsvorrichtung nach Anspruch 1 oder 2, **dadurch gekennzeichnet, dass** die Beleuchtungsvorrichtung (1) derart ausgestaltet ist, dass die Größe des Lichtspots (SP) variierbar ist und zur Generierung der vorbestimmten Lichtverteilung (LV) gesteuert wird.

4. Beleuchtungsvorrichtung nach Anspruch 3, **dadurch gekennzeichnet, dass** mit der Beleuchtungsvorrichtung eine vorbestimmte Lichtverteilung (LV) mit örtlich variierter Auflösung generierbar ist, wobei in Bereichen der vorbestimmten Lichtverteilung (LV) mit höherer örtlicher Auflösung die Größe des Lichtspots (SP) vermindert wird.

5. Beleuchtungsvorrichtung nach einem der vorhergehenden Ansprüche, **dadurch gekennzeichnet, dass** die Anzahl von Halbleiterdioden der Lichtquelle (2) eine oder mehrere Laserdioden umfasst.

6. Beleuchtungsvorrichtung nach einem der vorhergehenden Ansprüche, **dadurch gekennzeichnet, dass** die Beleuchtungsvorrichtung derart ausgestaltet ist, dass die Anzahl von Halbleiterdioden zur Generierung der vorbestimmten Lichtverteilung (LV) mit maximaler Leistung betrieben werden.

7. Beleuchtungsvorrichtung nach einem der vorhergehenden Ansprüche in Kombination mit Anspruch 3 oder 4, **dadurch gekennzeichnet, dass** eine optische Einrichtung (4) vorgesehen ist, auf welche das Lichtbündel (L) nach Passieren des Scanners (3) fällt, wobei mit der optischen Einrichtung (4) die Größe des Lichtspots variierbar ist.

8. Beleuchtungsvorrichtung nach Anspruch 7, **dadurch gekennzeichnet, dass** die optische Einrichtung (4) eine Linse und/oder einen Reflektor mit variierbarer Brennweite umfasst.

9. Beleuchtungsvorrichtung nach einem der vorhergehenden Ansprüche, **dadurch gekennzeichnet, dass** die Lichtquelle (2) monochromatisches Licht erzeugt und ein Konvertierungselement (5) zur Wandlung des Lichts der Lichtquelle in Weißlicht vorgesehen ist.

10. Beleuchtungsvorrichtung nach einem der vorhergehenden Ansprüche, **dadurch gekennzeichnet, dass** das Konvertierungselement (5) an der Lichtquelle (2) oder zwischen Lichtquelle (2) und Scanner (3) oder an einer Position angeordnet ist, an der das Lichtbündel (L) den Scanner (3) bereits passiert hat.

11. Beleuchtungsvorrichtung nach einem der vorhergehenden Ansprüche, **dadurch gekennzeichnet, dass** die Beleuchtungsvorrichtung (1) eine Signalleuchte und/oder einen Scheinwerfer umfasst.

12. Beleuchtungsvorrichtung nach einem der vorhergehenden Ansprüche, **dadurch gekennzeichnet, dass** die Beleuchtungsvorrichtung (1) einen Scheinwerfer umfasst und derart ausgestaltet ist, dass im Betrieb als vorbestimmte Lichtverteilung eine Abblendlichtcharakteristik und/oder eine Fernlichtcharakteristik generiert wird.

13. Beleuchtungsvorrichtung nach einem der vorhergehenden Ansprüche, **dadurch gekennzeichnet, dass** zwischen Lichtquelle (2) und Scanner (3) eine Einrichtung zur Strahlbegrenzung vorgesehen ist, mit welcher der Querschnitt des Lichtbündels entlang einer vorbestimmten Grenze begrenzt wird, wobei die Beleuchtungsvorrichtung (1) derart ausgestaltet ist, dass mit zumindest einem Abschnitt der vorbestimmten Grenze eine oder mehrere Hell-Dunkel-Grenzen in der vorbestimmten Lichtverteilung (LV) gebildet werden.

14. Beleuchtungsvorrichtung nach Anspruch 13, **dadurch gekennzeichnet, dass** die Einrichtung zur Strahlbegrenzung eine Blende und/oder einen Lichtleiter und vorzugsweise eine optische Faser umfasst.

15. Kraftfahrzeug, umfassend eine oder mehrere Beleuchtungsvorrichtungen (1) nach einem der vorhergehenden Ansprüche.

## Claims

1. An illumination device for a motor vehicle, comprising a light source (2) formed of a number of semiconductor diodes, and also a scanner (3) on which a light beam (L) produced from the light of the light source (2) falls and which during operation of the illumination device (1) changes the position of the light beam (L) and thereby moves a light spot (SP) produced by the light beam (L) at a distance from the illumination device (1), wherein a predetermined light distribution (LV) is generated with the moved light spot (SP), wherein the scanner (3) is a vector scanner with which the scanning rate and the scanning path can be varied and are controlled to generate the predetermined light distribution (LV), **characterised in that** the illumination device (1) is configured such that a predetermined light distribution (LV) having a locally varied luminous intensity can be generated with the illumination device (1), the scanning rate being reduced in regions of the predetermined light distribution (LV) having a greater luminous intensity, and the illumination device being configured such that the number of semiconductor diodes are operated at constant power to generate the predetermined light distribution (LV).

2. An illumination device according to Claim 1, **characterised in that** the illumination device (1) is configured such that the light spot (SP) according to the scanning path passes regions of the predetermined light distribution (LV) with higher luminous intensity more frequently.

3. An illumination device according to Claim 1 or Claim 2, **characterised in that** the illumination device (1) is configured such that the size of the light spot (SP) can be varied and is controlled in order to generate the predetermined light distribution (LV).

4. An illumination device according to Claim 3, **characterised in that** a predetermined light distribution (LV) with locally varied resolution can be generated with the illumination device, with the size of the light spot (SP) being reduced in regions of the predetermined light distribution (LV) of higher local resolution.

5. An illumination device according to one of the preceding claims, **characterised in that** the number of semiconductor diodes of the light source (2) comprises one or more laser diode(s).

6. An illumination device according to one of the preceding claims, **characterised in that** the illumination device is configured such that the number of semiconductor diodes is operated at maximum power to generate the predetermined light distribution (LV).

7. An illumination device according to one of the preceding claims in combination with Claim 3 or Claim 4, **characterised in that** an optical means (4) is provided onto which the light beam (L) falls after the passage of the scanner (3), the size of the light spot being able to be varied with the optical means (4).

8. An illumination device according to Claim 7, **characterised in that** the optical means (4) comprises a lens and/or a reflector with a variable focal distance.

9. An illumination device according to one of the preceding claims, **characterised in that** the light source (2) produces monochromatic light and a converting element (5) for converting the light from the light source into white light is provided.

10. An illumination device according to one of the preceding claims, **characterised in that** the converting element (5) is arranged on the light source (2) or between the light source (2) and scanner (3) or at a position at which the light beam (L) has already passed the scanner (3).

11. An illumination device according to one of the preceding claims, **characterised in that** the illumination device (1) comprises an indicator light and/or a headlight.

12. An illumination device according to one of the preceding claims, **characterised in that** the illumination device (1) comprises a headlight and is configured such that in operation a dipped headlight characteristic and/or a main beam characteristic is generated as predetermined light distribution.

13. An illumination device according to one of the preceding claims, **characterised in that** a means for beam limitation is provided between the light source (2) and scanner (3), with which means the cross-section of the light beam is limited along a predetermined boundary, the illumination device (1) being configured such that one or more light/dark boundaries are formed in the predetermined light distribution (LV) with at least a portion of the predetermined boundary.

14. An illumination device according to Claim 13, **characterised in that** the means for beam limitation comprises a stop and/or a fibre-optic conductor and preferably an optical fibre.

15. A motor vehicle, comprising one or more illumination devices (1) according to one of the preceding claims.

## Revendications

1. Dispositif d'éclairage destiné à un véhicule comprenant une source de lumière (2) constituée par un ensemble de diodes semi-conductrices ainsi qu'un scanner (3) sur lequel tombe un faisceau de lumière (L) produit à partir de la lumière de la source de lumière (2), et, qui modifie lors du fonctionnement du dispositif d'éclairage (1) la position du faisceau de lumière (L), et déplace ainsi un spot lumineux (SP) produit par le faisceau de lumière (L) à distance du dispositif d'éclairage (1), le spot lumineux mobile (SP) permettant de générer une distribution prédéfinie (LV) de la lumière, le scanner (3) étant un scanner vectoriel permettant de modifier la vitesse de balayage et le chemin de balayage et de les commander pour permettre la génération de la distribution de la lumière (LV) prédéfinie,
**caractérisé en ce que**
le dispositif d'éclairage (1) est réalisé pour permettre de générer une distribution prédéfinie (LV) de la lumière avec des intensités lumineuses variant localement, la vitesse de balayage étant réduite dans les zones de la répartition prédéfinie (LV) de la lumière ayant une plus forte intensité lumineuse, et le dispositif d'éclairage étant réalisé de sorte que les diodes de l'ensemble de diodes semi-conductrices permettant de générer la distribution (LV) prédéfinie de la lumière soient actionnées avec une puissance constante.

2. Dispositif d'éclairage conforme à la revendication 1,
**caractérisé en ce que**
le dispositif d'éclairage (1) est réalisé de sorte que conformément au chemin de balayage le spot lumineux (SP) passe plus fréquemment, dans les zones de la distribution (LV) prédéfinie de la lumière ayant une plus grande intensité lumineuse.

3. Dispositif d'éclairage conforme à la revendication 1 ou 2,
**caractérisé en ce que**
le dispositif d'éclairage (1) est réalisé de façon à permettre de modifier la dimension du spot lumineux (SP) et est commandé pour permettre de générer la répartition (LV) prédéfinie de la lumière.

4. Dispositif d'éclairage conforme à la revendication 3,
**caractérisé en ce que**
le dispositif d'éclairage permet de générer une distribution (LV) prédéfinie de la lumière avec une résolution variable dans l'espace, dans des zones de la répartition (LV) prédéfinie de la lumière ayant une plus grande résolution spatiale, la dimension du spot de lumière (SP) étant diminuée.

5. Dispositif d'éclairage conforme à l'une des revendications précédentes,
**caractérisé en ce que**
l'ensemble de diodes semi-conductrices de la source de lumière (2) comporte au moins une diode laser.

6. Dispositif d'éclairage conforme à l'une des revendications précédentes,
**caractérisé en ce que**
le dispositif d'éclairage est réalisé de sorte que les diodes de l'ensemble de diodes semi-conductrices permettant de générer la distribution prédéfinie de la lumière (LV) soit actionnée avec une puissance maximum.

7. Dispositif d'éclairage conforme à l'une des revendications précédentes, prise en combinaison avec la revendication 3 ou la revendication 4,
**caractérisé en ce qu'**
il est prévu un dispositif optique (4) sur lequel tombe le faisceau de lumière (L) après avoir passé le scanner (3), le dispositif optique (4) permettant de faire varier la dimension du spot lumineux.

8. Dispositif d'éclairage conforme à la revendication 7,
**caractérisé en ce que**
le dispositif optique (4) comporte une lentille et/ou un réflecteur ayant une distance focale variable.

9. Dispositif d'éclairage conforme à l'une des revendications précédentes,
**caractérisé en ce que**
la source de lumière (2) produit de la lumière monochromatique et il est prévu un élément convertisseur (5) permettant de transformer la lumière de la source de lumière en lumière blanche.

10. Dispositif d'éclairage conforme à l'une des revendications précédentes,
**caractérisé en ce que**
l'élément convertisseur (5) est monté sur la source de lumière (2) ou entre la source de lumière (2) et le scanner (3) ou dans une position dans laquelle le faisceau de lumière (L) a déjà passé le scanner (3).

11. Dispositif d'éclairage conforme à l'une des revendications précédentes,
**caractérisé en ce que**
le dispositif d'éclairage (1) et un feu de signalisation et/ou un phare.

12. Dispositif d'éclairage conforme à l'une des revendications précédentes,
**caractérisé en ce que**
le dispositif d'éclairage (1) est un phare et est réalisé de façon à générer en fonctionnement, en tant que distribution prédéfinie de la lumière une caractéristique de feu de croissement et/ou une caractéristique de feu de route.

13. Dispositif d'éclairage conforme à l'une des revendications précédentes,
**caractérisé en ce qu'**
il est prévu, entre la source de lumière (2) et le scanner (3) un dispositif de limitation du faisceau permettant de limiter la section du faisceau de lumière le long d'une limite prédéfinie, le dispositif d'éclairage (1) étant réalisé de façon à permettre de former, avec au moins un segment de la limite prédéfinie au moins une limite clair/obscur dans la distribution (LV) de la lumière.

14. Dispositif d'éclairage conforme à la revendication 13,
**caractérisé en ce que**
le dispositif de limitation du faisceau comporte un diaphragme et/ou un conducteur optique et de préférence une fibre optique.

15. Véhicule comprenant au moins un dispositif d'éclairage (1) conforme à l'une des revendications précédentes.
